**Europäisches Patentamt**

**European Patent Office**

**Office européen des brevets**

(19)

(11) Veröffentlichungsnummer: **0 075 830**
**B1**

(12) # EUROPÄISCHE PATENTSCHRIFT

(45) Veröffentlichungstag der Patentschrift:
24.09.86

(51) Int. Cl.⁴: **H 05 H 7/00,** G 01 T 1/29

(21) Anmeldenummer: **82108683.2**

(22) Anmeldetag: **20.09.82**

(54) **Überwachungsanordnung für die Beschleunigungsenergie eines Elektronenbeschleunigers.**

(30) Priorität: **29.09.81 DE 3138731**

(43) Veröffentlichungstag der Anmeldung:
**06.04.83 Patentblatt 83/14**

(45) Bekanntmachung des Hinweises auf die Patenterteilung:
**24.09.86 Patentblatt 86/39**

(84) Benannte Vertragsstaaten:
**DE FR GB SE**

(56) Entgegenhaltungen:
**DE-A-2 459 439**
**DE-A-2 926 883**
**US-A-2 485 470**
**US-A-3 179 804**
**US-A-3 477 023**
**US-A-4 184 073**

(73) Patentinhaber: **Siemens Aktiengesellschaft Berlin
und München, Wittelsbacherplatz 2, D-8000
München 2 (DE)**

(72) Erfinder: **Stieber, Volker, An der Lauseiche 12,
D-8520 Erlangen (DE)**

EP 0 075 830 B1

## Beschreibung

Die Erfindung bezieht sich auf eine Überwachungsanordnung für die Beschleunigungsenergie eines Elektronenbeschleunigers, mit einem dem Elektronenstrahl ausgesetzten Target zur Erzeugung von Röntgenstrahlung und einem dem Target in Strahlrichtung nachgeschalteten Elektronenabsorber zur Absorption der vom Target nicht absorbierten Elektronen (vgl. DE-A 29 26 883).

Bei Elektronenbeschleunigern mit einem dem Elektronenstrahl ausgesetzten Target zur Erzeugung von Röntgenstrahlung ist es üblich, die Intensität der austretenden Röntgenstrahlung mit einer im Strahlengang positionierten Ionisationskammer zu messen. Das Meßsignal der Ionisationskammer ist in erster Linie von der Zahl der Röntgenquanten, die das Meßvolumen je Zeiteinheit treffen, und in sehr viel geringerem Maße auch von der Energie der Röntgenquanten abhängig. Deren Wechselwirkung mit dem Gas der Ionisationskammer nimmt mit sinkender Quantenenergie zu. Die letztgenannte Abhängigkeit führt dazu, daß bei gleichbleibender Quantenzahl je Zeiteinheit ein etwas kleineres Signal erhalten wird, wenn die Energie zunimmt. Bei Kenntnis der Energie der Röntgenquanten bzw. der Energie der auf das Target auftreffenden Elektronen ließe sich daher das Ausgangssignal der Ionisationskammer einer bestimmten Zahl von Röntgenquanten je Zeit- und Volumeneinheit zuordnen. Wesentlich bedeutsamer ist es jedoch, daß mit abnehmender Quantenenergie auch die Wechselwirkung der Röntgenstrahlung mit dem Körper eines Patienten zunimmt. Daher kommt die Kenntnis der Energie der Röntgenquanten, d.h. der Härte der Röntgenstrahlung, allein schon aus therapeutischer Sicht eine besondere Bedeutung zu.

Bei bekannten Elektronenbeschleunigern, bei denen ein Target dem Elektronenstrahl zur Erzeugung von Röntgenstrahlung ausgesetzt ist, befindet sich ein Elektronenabsorber im Strahlengang hinter dem Target. Er besteht aus einem Material mit deutlich niedrigerer Ordnungszahl als der Ordnungszahl des Targets, wie z. B. Kupfer, Aluminium, Graphit. Die das Target durchdringenden Elektronen werden in diesem Elektronenabsorber absorbiert, ohne dabei afokale Röntgenstrahlen erzeugen zu können. Hinter dem Elektronenabsorber ist der Röntgenstrahlenkegel daher frei von Elektronenstrahlung.

Bei Elektronenbeschleunigern ist es auch bekannt, das Target elektrisch isoliert einzubauen und über einen Widerstand zu erden. Dies hat den Vorteil, daß man bei der Inspektionskontrolle des Beschleunigers die Aufladungskurve des Targets während eines Strahlimpulses auf einer Braun'schen Röhre aufzeichnen kann. Aus der Form der Aufladungskurve kann man auf bestimmte Justier- und Abstimmungsfehler des Elektronenbeschleunigers schließen.

Aus der US-A 3,179,804 geht hervor, daß die Energie des Elektronenstrahls eines Linearbeschleunigers durch einen Stapel hintereinander angeordneter Dosimeter gemessen wird, wobei eine vollständige Absorption erfolgen soll. Diese Methode ist ersichtlich nicht für Kontrollmessungen während einer Bestrahlung mit Röntgenstrahlung geeignet. In der US-A 2,485,470 ist schließlich angegeben, daß die Energie und Intensität von beschleunigten Teilchen durch Platten verschiedener Dicke eingestellt werden können. Eine Messung und Überwachung der Energie ist hierbei nicht vorgesehen.

Der Erfindung liegt die Aufgabe zugrunde, ein Meßsystem zu entwickeln, das hinreichend empfindlich ist, um auch geringfügige Schwankungen der Beschleunigungsenergie und damit auch der medizinisch relevanten Härte der erzeugten Röntgenstrahlung erfassen zu können.

Bei einer Überwachungsanordnung der eingangs genannten Art wird diese Aufgabe erfindungsgemäß dadurch gelöst, daß der Elektronenabsorber in mehrere gegeneinander elektrisch isolierte Abschnitte aufgeteilt ist und diese Abschnitte ein jeder für sich an je einem Eingang eines elektronischen Meßwertverarbeitungssystems angeschlossen sind.

Diese Lösung geht davon aus, daß die Reichweite der Elektronen in einem Medium bei den in der Röntgenstrahltherapie üblichen Elektronenenergien proportional der kinetischen Energie der Elektronen ist. Bei einem monochromatischen Elektronenstrahl fällt die Intensität des Elektronenstrahles nach dem Durchlaufen einer der kinetischen Energie proportionalen Wegstrecke steil auf Null ab. Daraus folgt, daß nahezu die gesamte elektrische Ladung des Elektronenstrahls im Bereich des Reichweitenendes des Elektronenstrahls in dem Material des Elektronenabsorbers frei wird. Bei einer Unterteilung des Elektronenabsorbers in mehrere gegeneinander isolierte Abschnitte kann daher aufgrund der Lage jenes Abschnittes, der den größten Ladungsimpuls erzeugt, die Reichweite und damit die Energie der Elektronen ermittelt werden.

In vorteilhafter Weiterbildung der Erfindung kann der Elektronenabsorber aus einem elektrisch leitenden Material mit einer Leitfähigkeit bestehen, die den vollständigen Ladungsausgleich im Zeitintervall zwischen zwei aufeinanderfolgenden Ladungsimpulsen gewährleistet. Eine ausreichende Leitfähigkeit und ein ausreichend schneller Ladungstransport sind bei den in ihren Abmessungen immerhin nicht vernachlässigbaren Abschnitten des Elektronenabsorbers eine Voraussetzung, um eine fortlaufende betriebsmäßige Überwachung der Beschleunigungsenergie vornehmen zu können.

In zweckmäßiger Ausgestaltung der Erfindung kann der Elektronenabsorber in drei, in

2

Strahlenrichtung gesehen etwa gleich tiefe Abschnitte unterteilt sein. Durch solch eine Dreifachunterteilung wird einerseits der konstruktive Aufwand in Anbetracht des nachgeschalteten Meßwertverarbeitungssystems begrenzt und andererseits zugleich eine für die meisten Zwecke noch ausreichend hohe Meßgenauigkeit bei der Ermittlung der Beschleunigungsenergie erreicht.

Die Meßgenauigkeit läßt sich deutlich erhöhen, wenn in Weiterbildung der Erfindung die Trennflächen der einzelnen Abschnitte des Elektronenabsorbers in Strahlenrichtung in eine Tiefe gelegt sind, die gleich der Eindringtiefe der Elektronen in diesem Material bei der zu überwachenden Beschleunigungsenergie sind. Denn gerade bei einer solchen Dimensionierung ergeben geringfügige Änderungen der Reichweite der Elektronen besonders starke Änderungen der Signalamplitude.

In zweckmäßiger Ausgestaltung der Erfindung kann das Target isoliert gelagert sein und an einem separaten Eingang des Meßerarbeitungssystems angeschlossen sein. Hierdurch erhält man weitere, besonders bei der Optimierung der Beschleunigungsparameter wesentliche Daten geliefert.

Die Meßgenauigkeit läßt sich noch weiter erhöhen, wenn das Meßwertverarbeitungssystem in besonders fortschrittlicher Weiterbildung der Erfindung die Differenz oder den Quotienten der je Strahlimpuls in den einzelnen Abschnitten des Elektronenabsorbers aufsummierten elektrischen Ladungen bildet. Die Differenz und auch der Quotient der Signalamplituden, die in den hintereinandergeschalteten Abschnitten des Elektronenabsorbers gebildet werden, wariieren stark mit der Beschleunigungsenergie. Sie sind zugleich weitgehend unabhängig von der Gesamtzahl der beschleunigten Elektronen.

In besonders zweckmäßiger Ausgestaltung der Erfindung kann das Meßwertverarbeitungssystem die Differenz oder den Quotienten der je Strahlimpuls in zwei benachbarten Abschnitten des Elektronenabsorbers aufsummierten elektrischen Ladungen bilden. Diese Differenz bzw. dieser Quotient der Signalamplituden, die in zwei benachbarten, im Bereich des Reichweiteendes der Elektroden im Elektronenabsorber liegenden Abschnitten erzeugt wird, ist es, die bei geringfügigen Änderungen der Beschleunigungsenergie die größtmöglichen Änderungen durchläuft und daher die geeignete Überwachungsgroße für die Beschleunigungsenergie der Elektroden und fur die Härte der erzeugten Röntgenstrahlung ist.

Weitere Einzelheiten der Erfindung werden anhand eines in den Figuren beschriebenen Ausfuhrungsbeispiels erläutert. Es zeigen:

Fig. 1 einen Schnitt durch den Strahlerkopf eines Elektronenbeschleunigers,

Fig. 2 eine vergrößerte Darstellung der im Strahlenschutzgehäuse eingesetzten Abschnitte des Elektronenabsorbers,

Fig. 3 eine Darstellung der Schaltanordnung des Meßwertverarbeitungssystems,

Fig. 4 eine Darstellung der Reichweite der Elektronen im Elektronenabsorber in Abhängigkeit von der Beschleunigungsenergie,

Fig. 5 eine vergrößerte Darstellung eines anderen im Strahlenschutzgehäuse eingesetzten Elektronenabsorbers, und

Fig. 6 einen Schnitt durch einen Strahlerkopf eines Elektronenbeschleunigers mit isoliert angeordnetem Target.

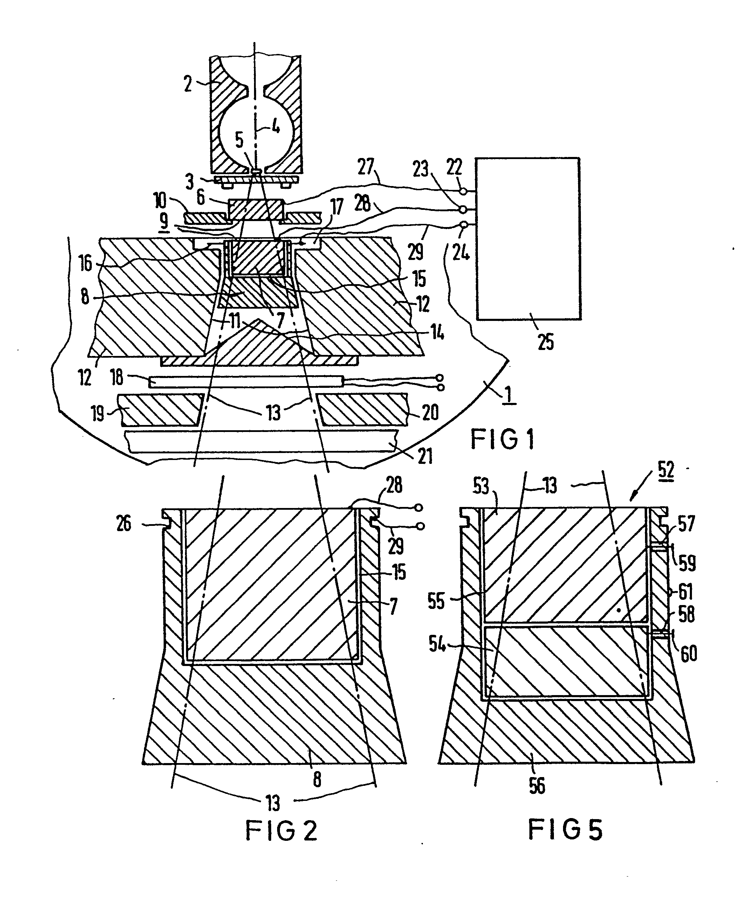

Eine vereinfachte Darstellung der Fig. 1 zeigt den Aufbau des Strahlerkopfes 1 eines Elektronenbeschleunigers. Das austrittsseitige Ende der Beschleunigerröhre 2 ist durch ein angeflanschtes Strahlenaustrittsfenster 3 gasdicht verschlossen. Dieses Strahlenaustrittsfenster trägt auf seiner Innenseite das dem Elektronenstrahl 4 ausgesetzte Target 5. In Strahlenrichtung hinter dem Strahlenaustrittsfenster 3 der Beschleunigerrohre 2 ist ein erster Abschnitt 6 eines aus drei Abschnitten 6, 7, 8 bestehenden Elektronenabsörbers 9 auf einem separaten Tragkorper 10 gehaltert dargestellt. In Strahlenrichtung hinter diesem ersten Abschnitt 6 des Elektronenabsorbers 9 schließt sich die kegelförmige Austrittsöffnung 11 des Strahlenschutzgehäuses 12 an. Sie ist hinsichtlich ihrer Weite dem maximal ausblendbaren Strahlenkegel 13 angepaßt. In der Austrittsöffnung 11 des Strahlenschutzgehäuses 12, in dieses kegelförmig hineinragend, ist ein Ausgleichskörper 14 für die Röntgenstrahlung befestigt. Die beiden anderen Abschnitte 7, 8 des Elektronenabsorbers 9 sind in der kegelförmigen Austrittsöffnung 11 des Strahlenschutzgehäuses 12 in Strahlenrichtung vor dem Ausgleichskörper 14 befestigt. Dabei trägt der eine der beiden Abschnitte 7, 8 den anderen Abschnitt 7 in einer Ausnehmung 15. Der Abschnitt 8 des Elektronenabsorbers 9 wird über einen Sprengring 16 über eine Einsenkung 17 im Strahlenschutzgehäuse 12 gehaltert. In Strahlenrichtung hinter dem Strahlenschutzgehäuse 12 und dem am Strahlenschutzgehäuse befestigten Ausgleichskörper 14 ist eine Ionisationskammer 18 zu erkennen. In Strahlenrichtung hinter der Ionisationskammer 18 sind drei verstellbare Blendenplatten 19, 20, 21 einer Strahlenblende zu erkennen, mit der der Strahlenkegel 13 weiter eingeengt werden kann. Jeder der drei Abschnitte 6, 7, 8 des Elektronenabsorbers 9 ist für sich elektrisch isoliert gelagert und an einem Eingang 22, 23, 24 eines Meßverarbeitungssystems 25 angeschlossen.

Die Fig. 2 zeigt in einer vergrößerten Darstellung die beiden im Strahlenschutzgehäuse 12 eingesetzten Abschnitte 7 und 8 des Elektronenabsorbers 9. Man erkennt in dieser vergrößerten Darstellung, daß der Abschnitt 8 des Elektronensbsorbers 9 in seinen äußeren Abmessungen genau der lichten Weite der Austrittsöffnung 11 des Strahlenschutzgehauses 12 angepaßt ist. Auf seiner dem Target 5 zugewandten Seite ist er zylindrisch aufgebohrt. In der so gebildeten Ausnehmung 15 ist der andere Abschnitt 7 des Elektronenabsorbers 9 eingepaßt. In dem dem Target 5 zugewandten Rand des Abschnittes 8 des Elektronenabsorbers 9 ist eine umlaufende Kerbe 26 für den Sprengring 16 zu erkennen. Alle drei Abschnittee 6, 7, 8 des Elektronenabsorbers sind aus Aluminium gefertigt und eloxiert. Durch die Eloxalschicht sind sie untereinander elektrisch isoliert. Sie sind elektrisch über je ein Kabel 27, 28, 29 mit den Eingängen 22, 23, 24 des Meßverarbeitungssystems 25 verbunden.

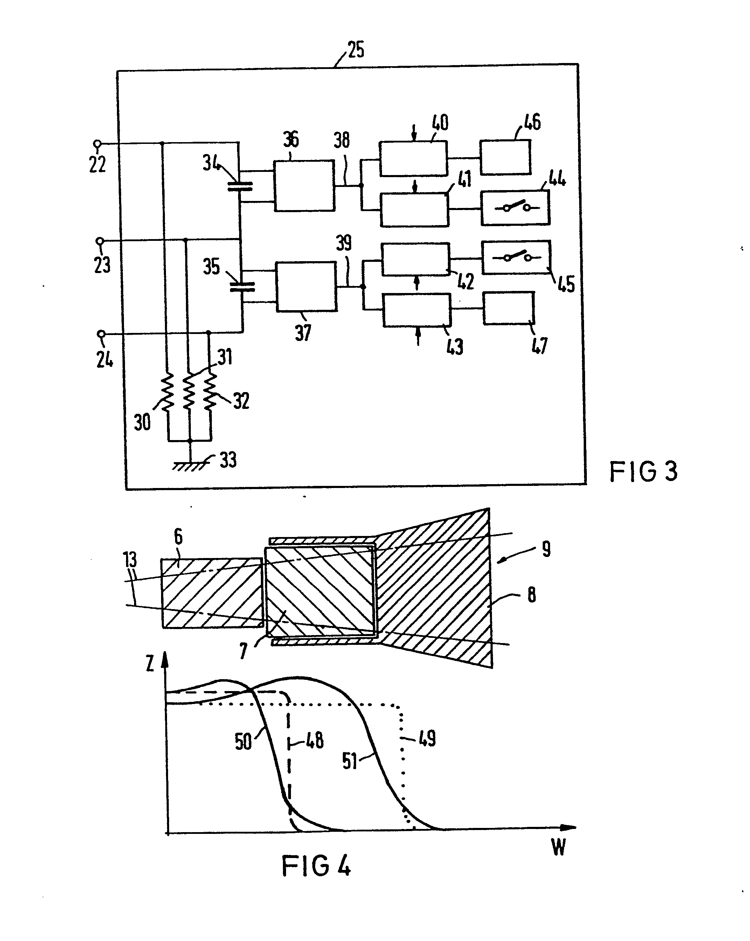

Die Fig. 3 zeigt den Innenaufbau des Meßverarbeitungssystems 25 der Fig. 1. Alle drei Eingänge 22, 23, 24, an die die einzelnen Abschnitte 6, 7, 8 des Elektronenabsorbers angeschlossen sind, sind über einen hochohmigen Widerstand 30, 31 bzw. 32 an Masse 33 gelegt. Die Anschlusse von je zwei benachbarten Abschnitten des Elektronenabsorbers 9 sind an die beiden Platten jeweils eines Kondensators 34, 35 und an die beiden Eingänge je eines parallel zu den Kondensatoren geschalteten Differenzverstärkers 36, 37 angeschlossen. Die Ausgänge 38, 39 der beiden Differenzverstärker sind jeweils an zwei voreinstellbaren Diskriminatoren 40, 41, 42, 43 angeschlossen. Während der eine der je einem Differenzverstärker 36, 37 zugeordneten Diskriminatoren 40, 43 nur bei Überschreiten einer voreinstellbaren Mindestsignalspannung durchlässig ist, ist der jeweils andere Diskriminator 41, 42 dieses Differenzverstärkers nur bei Unterschreiten einer voreinstellbaren Höchstspannung durchlässig. Die dem Maximalwert zugeordneten Diskriminatoren 41, 42 sind an einer Abschaltvorrichtung 44, 45 für den Linearbeschleuniger angeschlossen. Die dem Minimalwert zugeordneten Diskriminatoren 40, 43 sind jeweils an einer Alarmanlage 46, 47 angeschlossen.

Während des Betriebes trifft ein pulsierender Elektronenstrahl 4 noch im Vakuum der Beschleunigerrohre 2 unmittelbar auf das Target 5 auf und erzeugt dort Röntgenbremsstrahlung. Das Target 5, das aus einem Material höher Ordnungszahl, guter Wärmeleitfähigkeit und höhem Schmelzpunkt, wie z.B. Gold, Platin oder Wolfram besteht, ist unmittelbar auf dem die Beschleunigerröhre 2 abschließenden Strahlenaustrittsfenster 3 aufgelötet. Das Strahlenaustrittsfenster 3 schließt die Beschleunigerröhre 2 gasdicht ab und leitet zugleich auch die im Target 5 erzeugte Wärme ab.

Bei einer der betriebsmäßig üblichen Beschleunigungsenergie der Elektronen optimal angepaßten Dicke des Targets 5 enthält der das Target 5 verlassende Strahlenkegel 13 außer Röntgenstrahlung noch einen beachtlichen Anteil von Elektronen. Diese Elektronen, die eine wesentlich geringere Eindringtiefe haben als die Röntgenstrahlen, sollen in den nachgeschalteten Elektronenabsorber 9 aus dem Strahlenkegel 13 herausgefiltert werden. Damit in dem dem Target 5 nachgeschalteten Elektronenabsorber 9 nicht auch noch afokale Röntgenquanten erzeugt werden, besteht dieser Elektronenabsorber 9 aus einem Material mit wesentlich niedrigerer Ordnungszahl als das Target 5. Bevorzugte Materialien für den Elektronenabsorber 9 sind z.B. Kupfer, Aluminium oder Graphit. Die Elektronen werden in diesem Elektronenabsorber am Ende ihrer energieabhängigen Reichweite absorbiert, d.h. sie bleiben im Material des Elektronenabsorbers 9 stecken und laden diesen gegenüber seiner Umgebung elektrisch negativ auf. Der den Elektronenabsorber 9 durchdringende Strahlenkegel 3 ist hinter dem Elektronenabsorber 9 frei von Elektronen.

In der Fig. 4 ist die Reichweite von Elektronen in einem homogenen Material in Abhängigkeit von ihrer Energie dargestellt. Dabei ist auf der Ordinate die Zahl Z der Elektronen in einem Elektronenstrahl und auf der Abszisse die im Material des Elektronenabsorbers 9 zurückgelegte Wegstrecke W dargestellt. Die gestrichelte Kurve 48 und die punktierte Kurve 49 gelten beide für monochromatische Elektronenstrahlung. Dabei ist die Energie der der punktierten Kurve 49 zugeordneten Elektronen großer als jene der der gestrichelten Kurve 48 zugeordneten Elektronen. Diese beiden Kurven 48, 49 lassen erkennen, daß die Elektronen in dem homogenen Material des Elektronenabsorbers 9 eine ganz bestimmte, ihrer Energie entsprechende Reichweite haben. Nach dem Durchlaufen dieser Reichweite haben die Elektronen ihre Energie aufgebraucht und bleiben im Material des Elektronenabsorbers 9 stecken. Die Zahl der Elektronen des Elektronenstrahls fällt dann steil auf Null ab.

Im vorliegenden Fall haben wir es jedoch nicht mit einem Elektronenstrahl mit Elektronen gleicher Energie zu tun, weil ein Teil der Elektronen bereits einen Teil seiner Energie im Target 5 bei der Erzeugung der Röntgenbremsstrahlung abgegeben hat. Das führt dazu, daß die Intensität des Elektronenstrahls nicht so steil, sondern, wie die beiden ausgezogenen Kurven 50, 51 für verschiedene Beschleunigungsenergien zeigen, allmählich abfällt. Darüber hinaus werden im Elektronenabsorber 9 durch die Röntgenstrahlung noch weitere Elektronen freigesetzt, so daß zu Beginn des Bremsweges sogar noch ein geringer Anstieg der Anzahl der Elektronen im Strahlenkegel 13 festgestellt werden kann. Der Differentialquotient der ausgezogenen Kurven 50, 51 entspricht der Anzahl der am jeweiligen Ort absorbierten Elektronen. Die in den einzelnen Abschnitten 6, 7, 8 des Elektronenabsorbers 9 absorbierten Elektronen entsprechen daher jenen Elektronen, die in diesem Abschnitt auf Null abgebremst worden sind.

Man erkennt in der Darstellung der Fig. 4 sehr gut, daß gerade am Ende der Reichweitekurve der Elektronen starke Intensitätsänderungen mit der Änderung der Elektronenenergie verbunden sind. In der Fig. 4 wurde daher die Lage der drei Abschnitte 6, 7, 8 eines dreifach unterteilten Elektronenabsorbers 9 über den ausgezogenen Reichweitekurven 50, 51 eingetragen. Dadurch wird verdeutlicht, daß die Grenzen der einzelnen Abschnitte 6, 7, 8 des Elektronenabsorbers 9 möglichst dorthin zu legen sind, wo bei den betriebsmäßig einzuhaltenden Beschleunigungsenergien der steilste Abfall der Zahl der Elektronen im Strahlenkegel 13 zu erwarten ist. Der in den Fig. 1, 2 und 4 gezeigte dreiteilige Elektronenabsorber 9 ist daher besonders für einen Elektronenbeschleuniger mit zwei betriebsmäßig einstellbaren Beschleunigungsenergien geeignet.

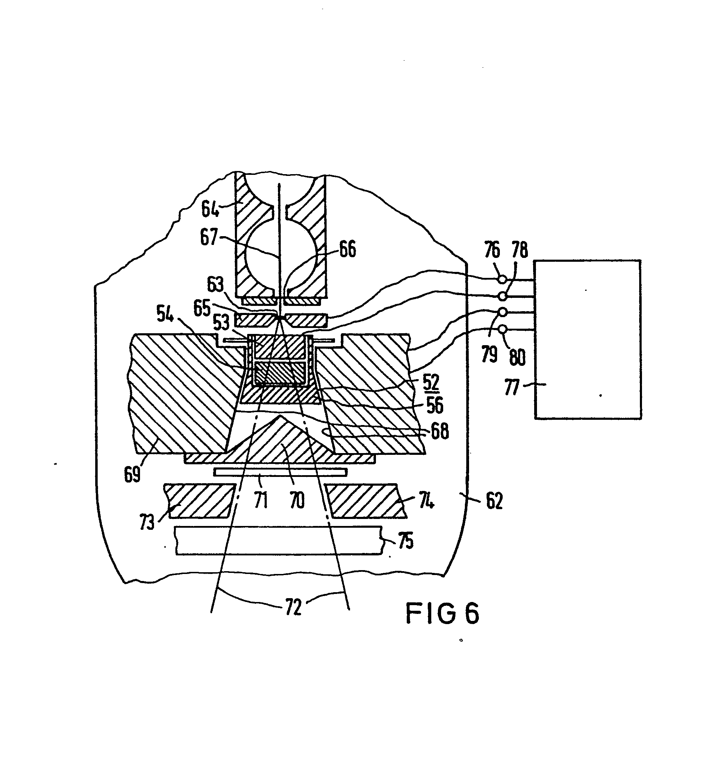

Die Fig. 5 zeigt einen anderen Elektronenabsorber 52, der aus vier Abschnitten besteht und vorzugsweise für einen Elektronenbeschleuniger mit drei betriebsmäßig einstellbaren Beschleunigungsenergien geeignet ist. Während der erste Abschnitt des Elektronenabsorbers 52 identisch mit dem ersten Abschnitt 6 des in der Fig. 1 gezeigten Elektronenabsorbers 9 sein kann, haben die beiden nachfolgenden Abschnitte 53 und 54 vorzugsweise eine zylindrische Form. Sie werden übereinander in der Bohrung 55 des in Strahlenrichtung letzten Abschnittes 56 eingesetzt. Dieser letzte Abschnitt 56 des Elektronenabsorbers 52 ist bis auf die etwas tiefer gehende Bohrung 55 etwa gleich ausgebildet wie der Abschnitt 8 des Elektronenabsorbers 9. Insbesondere hat er die gleichen Außenabmessungen wie die Austrittsöffnung 11 des Strahlenschutzgehäuses 12. Im Randbereich des letzten Abschnittes 56 sind Bohrungen 57, 58 eingelassen, durch die hindurch Kontaktnippel 59, 60 in die eingesetzten Abschnitte 53, 54 eingeschraubt werden können. Der Abschnitt 56 trägt selbst einen solchen Kontaktnippel 61. Über die Kontaktnippel 59, 60, 61 kann in hier nicht weiter dargestellter Weise der elektrische Anschluß an die Eingänge 22, 23, 24 des Meßverarbeitungssystems 25 erfolgen. Dabei ist zu beachten, daß die einzelnen Abschnitte und Kontaktnippel untereinander isoliert sind.

Bei Bedarf läßt sich eine noch feinere scheibenförmige Unterteilung des Elektronenabsorbers 9 vornehmen. Proportional damit wurde jedoch auch der Aufwand für das Meßverarbeitungssystem 25, wo zusätzliche Eingänge (nicht dargestellt) erforderlich werden, steigen.

Die während eines jeden Strahlenimpulses in jedem Strahlenabschnitt aufsummierten Ladungen, d.h. die in den einzelnen Abschnitten steckengebliebenen Elektronen, werden über die Eingänge 22, 23, 24 und die Ableitwiderstände 30, 31, 32 des Meßwertverarbeitungssystems 25 abgeleitet. Dabei lädt sich der zwischen zwei benachbarten Eingängen geschaltete Kondensator 34, 35 proportional der Differenz der in zwei benachbarten Abschnitten aufgesammelten Ladungen auf.

Die Darstellung der Fig. 6 zeigt den Aufbau des Strahlerkopfes 62 eines anderen Elektronenbeschleunigers, bei dem das Target 63 außerhalb der Beschleunigerröhre 64 in einem separaten Rahmen 65 gehaltert ist. Die Beschleunigerröhre 64 ist mit einem dünnen, für Elektronen gut passierbaren angeflanschten Strahlenaustrittsfenster 66 vakuumdicht abgeschlossen. Dss Target 63 ist dem aus dem Strahlenaustrittsfenster 66 austretenden Elektronenstrahl 67 ausgesetzt. In Strahlenrichtung hinter dem Target 63 schließt sich die kegelförmige Austrittsöffnung 68 des Strahlenschutzgehäuses 69 an, in der der aus drei Abschnitten 53, 54, 56 bestehende Elektronenabsorber 52 der Fig. 5 eingesetzt ist. In Strahlenrichtung hinter dem Elektronenabsorber 52 verkennt man einen sm Strahlenschutzgehäuse 69 befestigten Ausgleichskörper 70. In Strahlenrichtung sind dahinter eine Ionisationskammer 71 sowie mehrere der den Strahlenkegel 72 begrenzende Blendenplatten 73, 74, 75 der Primärstrahlenblende dargestellt.

Im Ausführungsbeispiel der Fig. 6 ist das Target 63 in seinem Rahmen 65 isoliert gelagert und elektrisch mit einem separaten Eingang 76 eines Meßwertverarbeitungssystems 77 verbunden. An den übrigen Eingangen 78, 79, 80 dieses Meßwertverarbeitungssystems 77 sind die drei Abschnitte 53, 54, 56 des Elektronenabsorbers 52 angeschlossen. Das Meßwertverarbeitungssystem 77 ist, abgesehen von der Erweiterung um einen Eingang, ähnlich aufgebaut wie jenes, das anhand der Fig. 3 beschrieben worden ist. Das anstelle des ersten Abschnitts 6 des Elektronenabsorbers der Fig. 1 an das Meßwertverarbeitungssystem 77 angeschlossene Target 63 übernimmt hier die gleiche Funktion wie dieser erste Abschnitt 6. Wegen der geringen Stärke des Targets 63 können in ihm nur Elektronen niedriger Energie absorbiert werden. Daher ist der diesem Target 63 entspringende Strom auch ein Maß für den Anteil der niederenergetischen Elektronen im ursprünglichen Elektronenstrahl 67 Ihm kommt daher auch eine besondere Bedeutung für die Optimierung der Beschleunigungsparameter zu.

Durch diese Art der Meßwertverarbeitung bleibt das Signal der Differenzverstärker 36, 37 weitgehend unabhängig von der absoluten Höhe der Zahl der Elektronen je Zeiteinheit. Dagegen ist das Signal am Ausgang der Differenzverstärker 36, 37 stark von der Lage der Enden der Energiereichweitekurve der Elektronen, d.h. von deren Energie, abhängig. An den dem Differenzverstärker nachgeschalteten Diskriminatoren 40, 41, 42, 43 kann sowohl ein Maximalwert der Differenz als auch ein Minimalwert eingestellt werden. Das Ausgangssignal der Diskriminatoren kann sowohl zur Abschaltung des Elektronenbeschleuniger als auch zur bloßen Alarmgebung verwendet

## Patentansprüche

1. Überwachungsanordnung für die Beschleunigungsenergie eines Elektronenbeschleunigers, mit einem dem Elektronenstrahl ausgesetzten Target (5) zur Erzeugung von Röntgenstrahlung und einem dem Target (5) in Strahlrichtung nachgeschalteten Elektronenabsorber (9, 52) zur Absorption der vom Target nicht absorbierten Elektronen, dadurch gekennzeichnet, daß der Elektronenabsorber (9, 52) in mehrere gegeneinander elektrisch isolierte Abschnitte (6, 7, 8, 53, 54, 56) aufgeteilt ist und diese Abschnitte ein jeder für sich an je einem Eingang (27, 28, 29, 76, 78, 79, 80) eines elektronischen Meßwertverarbeitungssystems (25, 77) angeschlossen sind.

2. Überwachungsanordnung nach Anpruch 1, dadurch gekennzeichnet, daß der Elektronenabsorber (9, 52) aus elektrisch leitendem Material mit einer Leitfähigkeit besteht, die den vollständigen Ladungsausgleich im Zeitintervall zwischen zwei aufeinanderfolgenden Strahlimpulsen gewährleistet.

3. Überwachungsanordnung nach Anspruch 1, dadurch gekennzeichnet, daß der Elektronenabsorber (9) in drei in Strahlenrichtung gesehen etwa gleich tiefe Abschnitte (6,7, 8) unterteilt ist.

4. Überwachungsanordnung nach Anspruch 1, dadurch gekennzeichnet, daß die Trennflächen der einzelnen Abschnitte (6, 7, 8, 53, 54, 56) des Elektronenabsorbers (9, 52) in Strahlenrichtung in einer Tiefe gelegt sind, die gleich der Eindringtiefe der Elektronen in diesem Material bei der zu überwachenden Beschleunigungsenergie sind.

5. Überwachungsanordnung nach Anspruch 1, dadurch gekennzeichnet, daß das Target (63) isoliert gelagert ist und an einen separaten Eingang (76) des Meßwertverarbeitungssystems (77) angeschlossen ist.

6. Überwachungsanordnung nach Anspruch 1, dadurch gekennzeichnet, daß das Meßwertverarbeitungssystem (25, 77) die Differenz oder den Quotienten der je Strahlimpuls in den einzelnen Abschnitten (6, 7, 8, 53, 54, 56) des Elektronenabsorbers (9, 52) aufsummierten elektrischen Ladungen bildet.

7. Überwachungsanordnung nach Anspruch 5 und 6, dadurch gekennzeichnet, daß das Meßverarbeitungssystem (77) die Differenz oder den Quotienten der je Strahlimpuls in einem Abschnitt (53, 54, 56) des Elektronenabsorbers (52) und im Target (63) aufsummierten elektrischen Ladungen bildet.

8. Überwachungsanordnung nach Anspruch 1, dadurchgekennzeichnet, daß das Meßwertverarbeitungssystem (25, 77) die Differenz oder den Quotienten der je Strahlenimpuls in zwei benachbarten Abschnitten des Elektronenabsorbers (9, 52) aufsummierten elektrischen Ladungen bildet.

9. Überwachungsanordnung nach Anspruch 6 oder 8, dadurch gekennzeichnet, daß das Meßwertverarbeitungssystem (25, 77) den Elektronenbeschleuniger abschaltet und/oder Alarm gibt, sobald einer der Differenzwerte bzw. Quotienten einen vorgegebenen Maximalwert überschreitet und/oder einen vorgegebenen Minimalwert unterschreitet.

10. Überwachungsanordnung nach Anspruch 1, dadurch gekennzeichnet, daß die einzelnen Abschnitte (6, 7, 8) des Elektronenabsorbers (9) im gegenseitigen Abstand voneinander montiert sind.

11. Überwachungsanordnung nach Anspruch 1, dadurch gekennzeichnet, daß die einzelnen Abschnitte (7, 8, 53, 54, 56) des Elektronenabsorbers durch eine isolierende Zwischenschicht getrennt bündig aufeinandergesetzt sind.

12. Überwachungsanordnung nach Anspruch 1, dadurch gekennzeichnet, daß der Elektronenabsorber (9, 52) aus einem Material gleicher oder niedrigerer Ordnungszahl als Kupfer besteht.

13. Überwachungsanordnung nach Anspruch 2 und 12, dadurch gekennzeichnet, daß der dem Target (5, 63) zugewandte Abschnitt (6, 53) des Elektronenabsorbers (9, 52) aus Graphit besteht.

14. Überwachungsanordnung nach Anspruch 2 und 12, dadurch gekennzeichnet, daß der Elektronenabsorber aus Aluminium besteht.

15. Überwachungsanordnung nach Anspruch 11, dadurch gekennzeichnet, daß die isolierende Zwischenschicht bei einem aus Aluminium bestehenden Elektronenabsorber eine Eloxalschicht ist.

16. Überwachungsanordnung nach Anspruch 11 dadurch gekennzeichnet, daß die isolierende Zwischenschicht aus einem lackartigen Überzug besteht.

## Claims

1. An arrangement for monitoring the acceleration energy of an electron accelerator, comprising a target (5) exposed to the electron beam to produce X-ray radiation, and an electron absorber (9, 52) connected following the target (5) in the direction of radiation to absorb electrons not absorbed by the target, characterised in that the electron absorber (9,52) is divided into a plurality of sections (6, 7, 8, 53, 54, 56) electrically insulated from one another and each separately connected to one input (27, 28, 29, 76, 78, 80) of an electronic processing system (25, 77) of the measured value(s).

2. A monitoring arrangement as claimed in Claim 1, characterised in that the electron absorber (9, 52) consists of an electrically- conductive material having a conductivity which ensures full charge equalization during the time interval between two consecutive beam pulses.

3. A monitoring arrangement as claimed in Claim 1, characterised in that the electron absorber (9) is divided into three sections (6, 7, 8) of approximately the same depth, viewed in the direction of the beam.

4. A monitoring arrangement as claimed in Claim 1, characterised in that the seperating surfaces of the individual sections (6, 7, 8, 53, 54, 56) of the electron absorber (9, 52) viewed in the direction of the beam, are arranged in depth which is identical to the penetration depth of the electrons in this material for the acceleration energy which is to be monitored.

5. A monitoring arrangement as claimed in Claim 1, characterised in that the target (63) is insulated and connected to a seperate input (76) of the measured value processing system (77).

6. A monitoring arrangement as claimed in Claim 1, characterised in that the measured value processing system (25, 77) forms for each beam pulse the difference or the quotient of the electric charges which are added in the individual sections (6, 7, 8, 53, 54, 56) of the electron absorber (9, 52).

7. A monitoring arrangement as claimed in Claims 5 and 6, characterised in that the measured value processing system (77) forms per beam pulse the difference or the quotient of the electric charges which are added in a section (53, 54, 56) of the electron absorber (52) and in the target (63).

8. A monitoring arrangement as claimed in Claim 1, characterised in that the measured value processing system (25, 77) forms per beam pulse the difference or the quotient of the electric charges which are added in two adjacent sections of the electron absorber (9, 52).

9. A monitoring arrangement as claimed in Claim 6 or 8, characterised in that the measured value processing system (25, 77) switches off the electron acceleration and/or gives an alarm as soon as one of the difference values or quotiens overshoots a predetermined maximal value and/or undershoots a predetermined minimal value.

10. A monitoring arrangement as claimed in Claim 1, characterised in that the individual sections (6, 7, 8) of the electron absorber (9) are mounted at a mutual distance from one another.

11. A monitoring arrangement as claimed in Claim 1, characterized in that the individual sections (7, 8, 53, 54, 56) of the electron absorber are seperately placed upon one another flush with an insulated intermediate layer.

12. A monitoring arrangement as claimed in Claim 1, characterised in that the electron absorber (9, 52) consists of a material of the same or lower ordinal number as copper.

13. A monitoring arrangement as claimed in Claim 2 and 12, characterised in that the section (6, 53) which faces the target (5, 63), of the electron absorber (9,52) consists of graphite.

14. A monitoring arrangement as claimed in Claim 2 and 12, characterised in that the electron absorber consists of aluminium.

15. A monitoring arrangement as claimed in Claim 11, characterised in that the insulated intermediate layer is an anodised layer in an electron absorber which consists of aluminium.

16. A monitoring arrangement as claimed in Claim 11, characterised in that the insulated intermediate layer consists of a lacquer-type coating.

**Revendications**

1. Dispositif de contrôle de l'énergie d'accélération d'un accélérateur d'électrons, avec une cible (5) exposée à un rayon d'électrons pour produiré un rayonnement X et avec un absorbeur d'éléctrons (9, 52) disposé en aval de la cible (5) et servant à absorber les électrons non absorbés par la cible, caractérisé par le fait que l'absorbeur d'éléctrons (9, 52) est subdivisé en plusieurs séctions (6, 7, 8, 53, 54, 56) électriquement isolées les unes des autres, et que chacune de ces sections est reliée, pour ce qui la concerne, à une entrée associée (27, 28, 29, 76, 78, 79, 80) d'un système électronique (25, 77) de traitement des valeurs de mesure.

2. Dispositif de contrôle selon la revendication 1, caractérisé par le fait que l'absorbeur d'électrons (9, 52) est constitué avec un matériau électriquement conducteur possédant une conductibilité qui assure la compensation complète des charges dans l'intervalle de temps entre deux impulsions successives du rayon.

3. Dispositif de contrôle selon la revendication 1, caractérisé par le fait que l'absorbeur d'électrons (9) est subdivisé en trois sections (6, 7, 8) qui ont sensiblement la même profondeur, si l'on regarde dans la direction du rayon.

4. Dispositif de contrôle selon la revendication 1, caractérisé par le fait que les surfaces de séparation des différentes sections (6, 7, 8, 53, 54, 56) de l'absorbeur d'électrons (9, 52) sont situées, si l'on regarde dans la direction du rayon, à une profondeur qui est égale à la profondeur de pénétration des électrons dans ce matériau, pour l'énergie d'accéleration à contrôler.

5. Dispositif de contrôle selon la revendication 1, caractérisé par le fait que la cible (63) est montée avec isolation et est reliée à une entrée séparée (76) du système de traitement des valeurs de mesure (77).

6. Dispositif de contrôle selon la revendication 1, caractérisé par le fait que le système de traitement des valeurs de mesure (25, 77) forme la différence ou le quotient entre les charges électriques additionnées par impulsion du rayon dans les différentes sections (6, 7, 8, 53, 54, 56) de l'absorbeur d'électrons (9, 52).

7. Dispositif de contrôle selon la revendication 5 et 6, caractérisé par le fait que le système de traitement des valeurs de mesure (77) forme la différence ou le quotient des charges électriques additionnées, par impulsion du rayon, dans une section (53, 54, 56) de l'absorbeur d'électrons (52) et dans la cible (63).

8. Dispositif de contrôle selon la revendication 1, caractérisé par le fait que le système de traitement des valeurs de mesure (25, 77) forme la différence ou le quotient des charges électriques additionnées, par impulsion du rayon, dans deux sections voisines de l'absorbeur d'électrons (9, 52).

9. Dispositif de contrôle selon la revendication 6 ou 8, caractérisé par le fait que le système de traitement des valeurs de mesure (25, 77) débranche l'accélérateur d'électrons et/ou émet une alarme, dès que l'une des valeurs de la différence ou du quotient dépasse une valeur maximale prédéterminée.

10. Dispositif de contrôle selon la revendication 1, caractérisé par le fait que le différentes sections (6, 7, 8) de l'absorbeur d'électrons (9) sont montées à des distances réciproques entre elles.

11. Dispositif de contrôle selon la revendication 1, caractérisé par le fait que les différentes sections (7, 8, 53, 54, 56) de l'absorbeur d'électrons sont superposées avec affleurement, et séparées l'une de l'autre par une couche intermédiaire isolante.

12. Dispositif de surveillance selon la revendication 1, caractérisé par le fait que l'absorbeur d'électrons (9, 52) est constitué avec un matériau qui possède la même atomicité que la cuivre ou une atomicité inférieure à celle du cuivre.

13. Dispositif de contrôle selon les revendications 2 et 12, caractérisé par le fait que la section (6, 53) de l'absorbeur d'électrons (9,52) qui est tournée vers la cible (5, 63), est constituée par du graphite.

14. Dispositif de contrôle selon les revendications 2 et 12, caractérisé par le fait que l'absorbeur d'électrons est constitué par de l'aluminium.

15. Dispositif de contrôle selon la revendication 11, caractérisé par le fait que la couche intermédiaire isolante est constituée par une couche anodisée, dans le cas d'un absorbeur d'électrons qui est constitué par de l'aluminium.

16. Dispositif de contrôle selon la revendication 11, caractérisé par le fait que la couche isolante intermédiaire est constituée par un revêtement du genre d'un vernis.

FIG 1

FIG 2

FIG 5

FIG 3

FIG 4

FIG 6